# EUROPÄISCHE PATENTSCHRIFT

(11) **EP 1 445 638 B1**
(45) Veröffentlichungstag und Bekanntmachung des Hinweises auf die Patenterteilung: **27.07.2016**
(21) Anmeldenummer: 04000809.6
(22) Anmeldetag: 16.01.2004
(51) Int. Cl.: G02B 27/00, G02B 27/09, G02B 27/12, F21L 4/02, F21V 5/00, F21V 5/02, F21V 5/04

(54) **Scheinwerfer, insbesondere Taschenleuchte, mit Leuchtdioden und dioptrischen Einrichtungen**
Projector with LEDs and refractive elements, in particular a pocket lamp
Projecteur à diodes électroluminescentes, notamment lampe de poche, comportant des éléments dioptriques

(30) Priorität: 07.02.2003 DE 10305018
(43) Veröffentlichungstag der Anmeldung: 11.08.2004
(73) Patentinhaber: R. Stahl Schaltgeräte GmbH, 74638 Waldenburg (DE)
(72) Erfinder: Würz, Helmut, 74676 Niedernhall (DE)
(74) Vertreter: Rüger, Barthelt & Abel

(56) Entgegenhaltungen:
- WO-A-99/09449
- US-A- 5 519 432
- US-A- 5 802 092
- US-A1- 2002 080 831

## Beschreibung

Der Helligkeit von Leuchtdioden sind bislang technische Grenzen gesetzt, wenn die Leuchtdioden noch zu einem vernünftigen Preis zu produzieren sein sollen.

Wenn es darum geht, eine größere Fläche auszuleuchten, oder eine größere Helligkeit zu erzeugen, geht man bislang den Weg, mehrere Leuchtdioden nebeneinander anzuordnen. Hierzu ist es beispielsweise aus der DE 200 19 735 U1 bekannt, ein Array von mehreren achsparallel nebeneinander angeordneten Leuchtdioden zu verwenden, die sich in einer Ebene befinden. Vor diesem Feld aus Leuchtdioden befindet sich ein Kondensor, der aus mehreren einzelnen Linsen aufgebaut ist. Die Kondensorlinsen befinden sich in dem für Kondensorlinsen üblichen Abstand vor den Leuchtdioden und zwar optisch zentriert, wobei jeder Leuchtdiode eine Kondensorlinse zugeordnet ist.

Bei einer anderen Anordnung nach der EP 0 860 805 befindet sich vor dem Array aus achsparallelen Leuchtdioden eine gemeinsame Kondensorlinse, die als Fresnellinse ausgeführt ist. Auf der von den Leuchtdioden abliegenden Seite der Kondensorlinse befindet sich eine Prismenplatte. Sie neigt die von den Leuchtdioden erzeugten Lichtkegel gegenüber der optischen Achse nach unten. Eine Beleuchtung ist hierdurch nicht in ausreichendem Maße möglich. Die Lichtkegel weiten sich zu stark auf. Die bekannten Anordnungen taugen lediglich für Ampelanlagen.

Aus der DE 199 37 852 ist eine Taschenlampe bekannt, bei der mehrere helle weiße Leuchtdioden ebenfalls achsparallel angeordnet sind. Wenn damit eine homogene Fläche beleuchtet werden soll, erzeugt jede der Leuchtdiode einen entsprechenden Fleck. Dort wo sich die Leuchtflecken überlagern, entsteht eine andere Helligkeit, so dass der Leuchtfleck auf der beleuchteten Fläche, eine Vielzahl von Hell-Dunkel-Grenzen erkennen lässt, die das Auge verwirren.

Eine ähnliche Anordnung ist aus der US 5,802,092 bekannt. Vor einem Array aus Leuchtdioden ist eine durchgehende Zylinderlinse angeordnet. Aus der von den Leuchtdioden abliegenden Seite befindet sich ein Array aus einzelnen Zylinderlinsen, wodurch scheinbar für jede Leuchtdiode eine bikonvexe Linse entsteht. Die Leuchtdioden befinden sich im Brennpunkt dieser bikonvexen Linse, womit auf der Austrittseite der optischen Anordnung pro Lichtpunkt der Leuchtdiode ein paralleles Strahlenbündel entsteht. Das parallele Strahlenbündel gelangt in eine Sammellinse, die die parallelen Lichtstrahlen in einem Brennpunkt vereinigt. Aufgrund dieser optischen Anordnung werden die Bilder der einzelnen Leuchtdioden, die auf der Eintrittseite der Sammellinse nebeneinander angeordnet sind, im Brennpunkt übereinander projiziert. Für den Betrachter bzw. für die Beleuchtungsverhältnisse ergibt sich an der Stelle des Brennpunktes scheinbar eine einzige Lichtquelle. Das Array der nebeneinander befindlichen Lichtquellen verschwindet.

Da das Leuchtdiodenarray in der Brennebene der bikonvexen Linsen angeordnet sind, die die parallelen Lichtstrahlen erzeugen ist die Anordnung räumlich groß.

Es ist deswegen auch vorgeschlagen, die Leuchtdioden in eine bewegliche Membran einzusetzen, um die Leuchtflächen übereinander zu bekommen. Allerdings ist auch diese Lösung unbefriedigend.

Ausgehend hiervon ist es Aufgabe der Erfindung, eine Leuchtenanordnung zu schaffen, die derart gestaltet, ist, dass die von mehreren Leuchtdioden ausgehenden Lichtkegel auf einer Fläche einen Leuchtfleck erzeugen, der zumindest im Kernbereich gleichmäßig hell ist.

Diese Aufgabe wird erfindungsgemäß mit der Leuchtenanordnung mit den Merkmalen des Anspruches 1 gelöst.

In einem Gehäuse sind wenigstens zwei Lichtquellen nebeneinander angeordnet. Die beiden Lichtquellen strahlen zur selben Seite des Gehäuses und jede von ihnen weist einen Licht aussenden Bereich auf. Im Strahlengang der beiden Lichtquellen befindet sich eine erste dioptrische Einrichtung. Die dioptrische Einrichtung ist derart gestaltet, dass sie aus den reellen Licht aussenden Bereichen - im optischen Sinne bilden sie die Gegenstände - ein einziges zumindest angenähert virtuelles Bild der Licht aussenden Bereich erzeugt. In diesem virtuellen Bild überlagern sich im wesentlichen die Licht aussenden Bereich zu einem einzigen Licht aussenden Bereich.

Im Strahlengang hinter der dioptrischen Einrichtung befindet sich eine weitere abbildende dioptrische Einrichtung, die dazu eingerichtet ist, das Bild des virtuellen Licht aussendenden Bereiches auf eine Fläche abzubilden. Dadurch entsteht ein einziger heller Fleck, der zumindest im Kernbereich keine auffälligen und störenden Hell-Dunkel-Grenzen erkennen lässt. Der Fleck ist einigermaßen gleichmäßig ausgeleuchtet, wobei ein allmählicher Übergang zu weniger hellen Bereich nicht störend ist.

Unangenehm störend wären lediglich relativ sprunghafte Änderungen, die dazu führen, dass bei der Betrachtung des so beleuchteten Gegenstands für das menschliche Auge weniger hell beleuchtete Bereich im Schwarzen ersaufen würden.

Die Lichtquelle ist vorzugsweise von einer Leuchtdiode gebildet.

Die erste dioptrische Einrichtung kann für jede Lichtquelle, die nicht auf der optischen Achse der abbildenden dioptrischen Einrichtung liegt, ein Prisma umfassen.

Wenn die Leuchtdioden jeweils ringförmig um die optische Achse der abbildenden dioptrischen Einrichtung angeordnet sind, können die Prismen jeweils zu einem Ring zusammengefasst sein, der einen dreieckigen Querschnitt aufweist. Es versteht sich, dass die Prismen auch durch eine Fresnelanordnung nachgebildet sein können.

Wenn lediglich Prismen verwendet werden, liegt das virtuelle Bild in der Ebene der Licht aussendenden Bereiche.

Ein schmälerer Öffnungswinkel bzw. ein vergrößertes virtuelles Bild lässt sich erreichen, wenn zwischen der ersten dioptrischen Einrichtung und den Leuchtdioden Mittel vorgesehen sind, die das virtuelle Bild aus der Sicht der abbildenden Optik hinter den Leuchtflecken liegen lässt, die den reellen Licht aussenden Bereichen entsprechen.

Eine andere Möglichkeit, das gewünschte virtuelle Bild zu erzeugen, in dem sich die vielen einzelnen Leuchtflecken überlagern, besteht in der Verwendung von Sammellinsen, die entsprechend den Lichtquellen rasterartig angeordnet sind, wobei die Linsen und die Lichtquellen optisch dezentriert sind.

Der Abstand der Lichtquelle von der zugehörigen Sammellinse (Gegenstandsweite) der ersten dioptrischen Einrichtung ist kleiner als es der Brennweite der betreffenden Sammellinse entspricht.

Auch hierbei ist es wieder möglich, die einzelnen Sammellinsen durch Linsen nachzubilden, die nach den Fresnelprinzip aufgebaut sind. Das Gleiche gilt für die abbildende dioptrische Einrichtung. Diese im einfachsten Falle eine einfache Sammellinse. Zur Verstellung der Größe des Leuchtflecks ist die abbildende dioptrische Einrichtung verstellbar gefasst.

Im übrigen sind Weiterbildungen der Erfindung Gegenstand von Unteransprüchen. Dabei sollen auch solche Merkmalskombinationen als beansprucht angesehen werden, auf die kein eigenes Ausführungsbeispiel gerichtet.

In der Zeichnung ist ein Ausführungsbeispiel des Gegenstandes der Erfindung dargestellt. Es zeigen:
- Fig. 1: eine erfindungsgemäße Taschenlampe in einem schematisierten Längsschnitt,
- Fig. 2: den Strahlengang in der Taschenlampe nach Figur 1 und
- Fig. 3: ein anderes Ausführungsbeispiel der dioptrischen Einrichtung unter Veranschaulichung des entstehenden Strahlengangs.

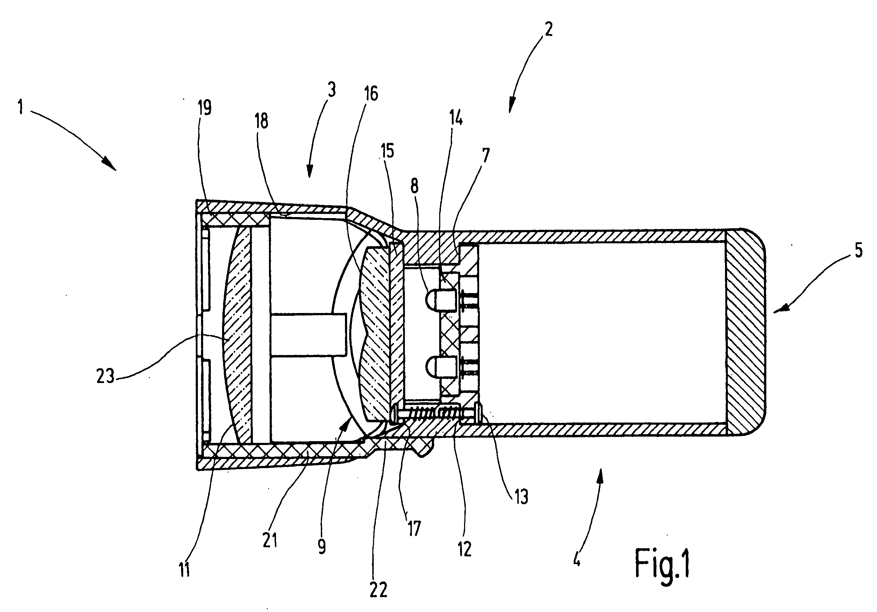

Figur 1 zeigt in einem Längsschnitt eine Taschenlampe 1. Zu der Taschenleuchte gehört ein Gehäuse 2, das an einem Ende einen Leuchtenkopf 3 und am anderen Ende eine Batteriefach 4 bildet, das von einem Deckel 5 verschlossen ist. Innerhalb des Gehäuses 2 befindet sich ein Träger 7 mit mehreren Leuchtdioden 8, eine erste dioptrische Einrichtung 9 sowie eine abbildende dioptrische Einrichtung 11.

Das Batteriefach 4 bildet bei dem gezeigten Ausführungsbeispiel einen zylindrischen Raum, der zur Aufnahme mehrerer Batterien, beispielsweise mehrerer Monozellen oder parallel nebeneinander angeordneter Mignonzellen eingerichtet ist. Er endet an seinem dem Leuchtenkopf 3 benachbarten Ende, an einer nach innen vorspringenden Schulter 12, auf der der Träger 7 aufliegt. Der Träger 7 ist an der Schulter 12 mit einer Reihe von Schrauben 13 befestigt. In dem Träger 7 sitzt ein Isolierstück 14, mit dessen Hilfe die Lichtdioden 8 optisch zentriert werden. Die Leuchtdioden 8 sind so angeordnet, dass ihre optischen Achsen zueinander parallel sind. Aus Gründen der Übersichtlichkeit sind lediglich zwei Leuchtdioden 8 und 8a gezeigt; die Anzahl ist jedoch nicht auf zwei beschränkt.

Die elektrischen Anschlüsse, eventuelle Stabilisierungsschaltungen und sonstige elektromechanische Einrichtungen, wie Schalter und dergleichen sind in der Darstellung nicht veranschaulicht, da sie für das Verständnis der Erfindung nicht wesentlich sind und lediglich die Zeichnung mit Details überladen würden.

Die erste dioptrische Einrichtung 9 besteht aus einer Linsenrasterplatte 15 mit einer Vielzahl einzelner plankonvexer Sammellinsen 16. Die Linsenrasterplatte 15 ist auf einer weiteren Schulter 17 im Strahlengang der Leuchtdioden 8 angeordnet und dort festgeschraubt. Sie ist parallel zu der Ebene angeordnet, in der sich die Leuchtflächen der Leuchtdioden 8 befinden.

Die Anzahl der Linsen 16 entspricht der Anzahl der Leuchtdioden 8. Die Linsen 16 sind mit ihren optischen Achsen parallel zueinander angeordnet und entsprechend Zahlenmäßig der Anzahl der verwendeten Leuchtdioden 8. Somit ist jeder Leuchtdiode 8 eine Sammellinse 16 der ersten dioptrischen Einrichtung 9 zugeordnet. Die Art und Weise wie die optischen Achsen der Leuchtdiode 8 und der zugehörigen Sammellinse 16 zueinande ausgerichtet sind, ergibt sich aus der weiter unten angegebenen Erläuterung.

Im Bereich des Lampenkopfes 3 ist der Durchmesser des Gehäuses 2 vergrößert und bildet einen zylindrischen Innenraum, der von einer zylindrischen Innenwand 8 begrenzt ist. In diesem so begrenzten Innenraum sitzt eine rohrförmige Linsenfassung 19, die im Wesentlichen spielfrei an der Innenseite 18 geführt ist. Die Linsenfassung 19 ist mit einem axial sich ertreckenden Fortsatz 21 versehen, der an der Rückseite des Lampenkopfes 3 vorsteht und einen auf der Außenseite des Batteriefachs 4 befindlichen und dort aufliegenden Betätigungsgriffe 22 bildet.

In der Linsenfassung 19 sitzt eine zweite dioptrische Einrichtung 23 in Gestalt einer plankonvexen Linse. Die plankonvexe Linse 23 wirkt als abbildende Optik und dient dazu, ein reelles Bild auf der zu beleuchtenden Fläche zu erzeugen.

Vereinfacht ausgedrückt wirkt die Anordnung aus zu beleuchtender Fläche, der abbildenen dioptrischen Einrichtung 23 und der ersten dioptrischen Einrichtung 8 wie ein Auge, das mit Hilfe einer Lupe einen Gegenstand betrachtet.

Die zu beleuchtende Fläche entspricht der Netzhaut. Die Augenlinse der dioptrischen Einrichtung 23 und die Lupe der dioptrischen Einrichtung 9, wobei der zu betrachtende Gegenstand die leuchtende Sperrschicht der Leuchtdiode 8 ist.

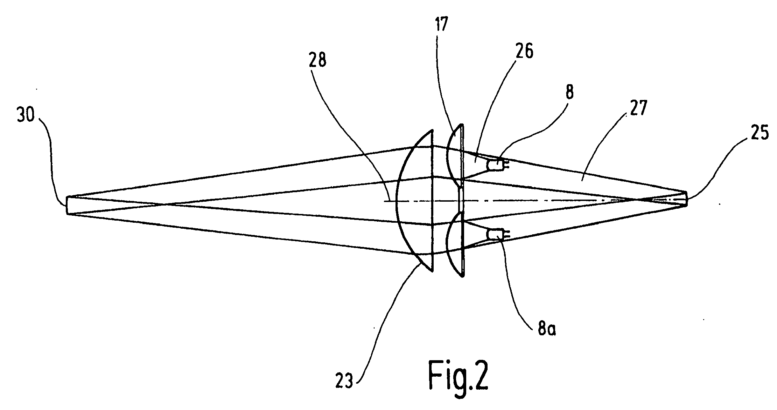

Der Strahlengang wird nachstehend anhand von Figur 2 erläutert.

Der Leuchtfleck innerhalb der Leuchtdiode 8 stellt im Sinne der Abbildungsgesetze den leuchtenden Gegenstand dar. Der Leuchtfleck hat von der hinteren Hauptebene der zugehörigen Sammellinse 8 einen Abstand der kleiner als die Brennweite der Sammellinse 16 ist, d.h. die Gegenstandsweite ist kleiner als die Brennweite. Unter diesen Umständen entsteht ein virtuelles Bild des durch den Leuchtfleck gebildeten Gegenstand bei 25.

Die Randstrahlen, die von dem Leuchtfleck der Leuchtdiode 8 ausgehen, begrenzen, soweit sie zur Abbildung herangezogen werden, einen Kegel 26 der aufgrund der Abbildungsgesetze zu einem Strahlenkegel 27 wird, an dessen Ende das virtuelle Bild 25 steht.

Die Größe des virtuellen Bildes 25 und dessen Abstand von der hinteren Hauptebene der Linse 17 hängt in bekannter Weise von der Gegenstandsweite ab.

Wie bereits oben ausgeführt, ist die Linse 16 hinsichtlich ihrer optischen Achse gegenüber der optischen Achse der Leuchtdiode 8 achsparallel dezentriert, und zwar so, dass das virtuelle Bild 25 auf der optischen Achse der abbildenden dioptrischen Einrichtung 23 liegt. Die optische Achse dieser Linse 23 ist durch eine strichpunktierte Line 28 angedeutet.

Dies bedeutet, dass für die einzige Leuchtdioden 8, die sich auf der optischen Achse befinden kann, die Dezentrierung null ist, d.h. die optische Achse der Leuchtdiode fällt mit der optischen Achse der zugehörigen Linse 17 zusammen. Je weiter die Leuchtdiode 8 bzw 8a radial von der optischen Achse 28 entfernt ist, umso stärker ist die Dezentrierung der optischen Achse der zugehörigen Linse 16, damit die obige Bedingung eingehalten wird, wonach das jeweils entstehende virtuelle Bild 25 des Leuchtflecks der jeweiligen Leuchtdiode zentriert auf der optischen Achse 28 liegt. Da diese Bedingung für sämtlich Leuchtdioden der Anordnung gilt, also nicht nur für die Leuchtdiode 8 sondern auch für die symmetrisch zu der optischen Achse 28 liegende Leuchtdiode 8a sowie für weitere Leuchtdioden 8, die der Übersichtlichkeitshalber nicht gezeigt sind, überlagern sich die virtuellen Bilder 25 sämtliche Leuchtdioden 8 an demselben Ort auf der optischen Achse 28. Sie haben denselben Abstand von der Ebene der Leuchtdioden.

Diese virtuelle Bild 25 jedes Leuchtflecks, das gleichzeitig die Überlagerung sämtlicher virtuellen Bilder der Leuchtflecken sämtlicher Leuchtdioden 8 ist, wird nun mit Hilfe der abbildenden dioptrischen Einrichtung 23, die beispielsweise wie gezeigt durch eine Plankonvexlinse gebildet ist, auf die Bildebene projiziert. Die Bildebene bildet jene Fläche, die mit Hilfe der Leuchtdioden 8 beleuchtet werden soll.

Da die virtuellen Bilder, wie erläutert übereinander deckungsgleich sind, entsteht ein einziger Leuchtfleck innerhalb dessen Grenzen keine Helligkeitsstrukturen mehr zu erkennen sind, soweit die Leuchtdioden einen homogenen Leuchtfleck produzieren. Lediglich zu den Rändern hin, zeigt der auf der zu beleuchtenden Fläche zu erkennende Leuchtfleck 30 noch gewissen Helligkeitsschwankungen, die jedoch nicht störend sind.

Die Größe des Leuchtflecks 30 lässt sich variieren, indem der Abstand der hinteren Hauptebene der abbildenden dioptrischen Einrichtung 23 von dem virtuellen Bild 25 verändert wird. Dies wird erreicht, indem der Benutzer den Handgriff 22 verstellt, wodurch die dioptrische Einrichtung 23 längs der optischen Achse 28 verschoben wird, bis die gewünschte Größe des Leuchtflecks 30 erzielt ist.

Der Leuchtfleck 30, der auf der zu beleuchtenden Fläche erzeugt wird, ist eine mehr oder weniger scharfe Abbildung des virtuellen Bildes 25. Die kleinste Größe, die der Leuchtfleck 30 einnehmen kann, wird erreicht, wenn das virtuelle Bild 25 scharf auf die zu beleuchtende Fläche abgebildet wird. Die Größe des Leuchtflecks 30 auf der beleuchteten Fläche ist dann abhängig von der Bildweite und der Brennweite der Linse 23.

Der Vorteil der beschriebenen Anordnung besteht darin, dass das optische System, bestehend aus den beiden dioptrischen Einrichtungen 9 und 23, sehr kurz baut, da ein virtuelles Bild verwendet wird, das sich aus der Sicht der abbildenden Optik 23 hinter der nach Art einer Lupe wirkenden ersten dioptrischen Einrichtung 9 liegt. Dadurch können die beiden dioptrischen Einrichtungen sehr dicht aneinander herangerückt werden.

Die erfindungsgemäße Einrichtung eignet sich nicht nur, wie gezeigt, für Taschenlampen, sondern auch für sonstige Scheinwerferanwendungen. Die Größe des Leuchtflecks 30 auf dem zu beleuchtenden Gegenstand kann nahezu beliebig groß gemacht werden, indem die Gegenstandsweite d.h. der Abstand des virtuellen Bildes 25 von der hinteren Hauptebene der Sammellinse 28 kleiner gemacht wird, als deren Brennweite. Auf diese Weise eignet sich die Anordnung auch zum Ausleuchten großer Flächen.

Da mit der gezeigten Anordnung praktisch beliebig viele Leuchtdioden optisch parallel geschaltet werden können, lässt sich auch mit nichtkohärentem Licht eine sehr große Helligkeit erzeugen.

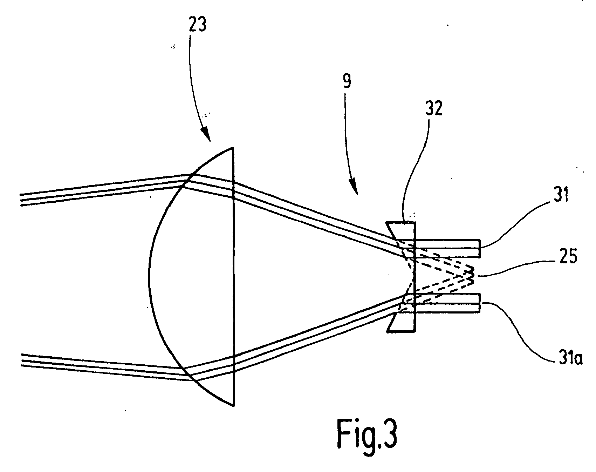

Wie der vorausgehenden Erläuterung zu entnehmen ist, besteht ein wesentlicher Gedanke darin, mit Hilfe dioptrischer Einrichtungen die Leuchtflecken der Leuchtdioden 8 aus der Sicht der abbildenden Optik in Gestalt der Sammellinse 23 möglichst deckungsleich übereinander zu legen. Aus der Kenntnis dieses Grundgedankens heraus, lassen sich auch andere optische Systeme konstruieren, die von diesen Eigenschaften Gebrauch machen. Als Beispiel sei hier eine Anordnung erläutert, wie sie in Figur 3 gezeigt ist.

Die Leuchtdioden 8 sind bei der Darstellung nach Figur 3 durch ihre Leuchtflecken 31 symbolisiert. Das hiervon ausgehende Licht gelangt zu einer ersten dioptrischen Einrichtung 9, bei der die Sammellinsen 16 durch einfache Prismen 32 ersetzt sind, d.h. zu jeder Leuchtdiode 8 gehört ein Prisma 32. Jedes Prisma 32 lässt wiederum ein virtuelles Bild 25 entstehen, das sich bei entsprechender Ausgestaltung und Dimensionierung des Prismas 32 auf der optischen Achse 28 befindet. Da die Brennweite des Prismas unendlich ist, befindet sich das virtuelle Bild 25 in der Ebene der Leuchtflecken 31 der Leuchtdioden 8. Das auf diese Weise erhaltene virtuelle Bild 25, das sich aus den einzelnen virtuellen Bildern der Leuchtdioden zusammensetzt, wird wiederum wie zuvor mit Hilfe der Sammellinse 23 auf die zu beleuchtende Fläche abgebildet.

Anstelle der einzelnen Prismen 32 können Prismenringe verwendet werden, wobei jeder Ring einem Ring von Leuchtdioden zugeordnet ist, der um die optische Achse 28 herum verläuft. Der Ring weist im Querschnitt ein dreieckiges Profil entsprechend dem Keilwinkel des erforderlichen Prismas auf.

Der Vorteil der Verwendung eines Prismas gegenüber dem Linsenraster, wie es in Figur 1 gezeigt ist, besteht darin, dass ein seitlicher Versatz der Prismen gegenüber der optischen Achse und einer Abstandsvariation praktisch keinen Einfluss auf die Lage und die Übereinanderprojektion der virtuellen Bilder zu dem virtuellen Bild 25 hat, vorausgesetzt, dass der Keilwinkel der Prismen 32 stimmt.

Eine weitere Verringerung des Platzbedarfs lässt sich erreichen, wenn die dioptrischen Einrichtungen nach dem Fresnelprinzip als Zonenlinsen bzw -prismen ausgeführt sind.

Ein weiterer Vorteil der gezeigten Anordnung besteht in der Möglichkeit, anstelle von weißen Leuchtdioden farbige Leuchtdioden zu verwenden. Da sich ihr Licht im Bereich des virtuellen Bildes 25 deckungsleich überlagert, kann aus den Spektral- bzw. Grundfarben ein weißer Leuchtfleck zusammengesetzt werden. Die Farbe des Leuchtflecks lässt sich ohne weiteres variieren, indem bei Verwendung von farbigen Leuchtdioden bestimmte Farben ein- oder ausgeschaltet werden.

Eine Leuchte weist eine Vielzahl von in einer gemeinsamen Ebene achsparallel angeordneten Leuchtdioden auf. Im Strahlengang vor den Leuchtdioden befindet sich eine dioptrische Einrichtung, die dafür sorgt, dass die Leuchtflecken der Leuchtdioden zu einem virtuellen Bild zusammengefasst sich, dass sich auf der optischen Achse befindet und die Leuchtflächen sämtlicher Leuchtdioden vereinigt. Das so erhaltene virtuelle Bild wird mit Hilfe einer abbildenden Optik auf die zu beleuchtende Fläche projiziert.

## Patentansprüche

1. Leuchte (1)
mit einem Gehäuse (2),
mit wenigstens zwei Lichtquellen (8), die nebeneinander in dem Gehäuse (2) angeordnet sind, die alle zu der selben Seite des Gehäuses (2) strahlen und von denen jede einen Licht aussendenden Bereich (31) aufweist, und mit einer abbildenden dioptrischen Einrichtung (23), **gekennzeichnet durch** eine erste dioptrische Einrichtung (9), die sich im
Strahlengang vor den Lichtquellen (8) befindet und die derart gestaltet ist, dass sie aus den reellen Licht aussendenden Bereichen (31) ein einziges zumindest angenähert virtuelles Bild (25) der Licht aussendenden Bereich (31) erzeugt, in dem sich die Licht aussendenden Bereiche (31) zu im Wesentlichen einem einzigen Licht aussendenden Bereich (25) überlagern, wobei die abbildende dioptrische Einrichtung (23)
dazu eingerichtet ist das Bild des virtuellen, Licht aussendenden Bereichs (25) auf eine Fläche abzubilden.

2. Leuchte nach Anspruch 1, **dadurch gekennzeichnet, dass** die Lichtquelle (8) von einer Leuchtdiode gebildet ist.

3. Leuchte nach Anspruch 1, **dadurch gekennzeichnet, dass** die erste dioptrische Einrichtung (9) für jede Lichtquelle (8), die nicht auf der optischen Achse (28) der abbildenden dioptrischen Einrichtung (23) liegt, ein Prisma (32) umfasst.

4. Leuchte nach Anspruch 3, **dadurch gekennzeichnet, dass** bei einer ringfömigen Anordnung () der Lichtquellen (8) die Prismen (32) zu einem Ring () mit dreieckigem Querschnitt zusammengefasst sind.

5. Leuchte nach Anspruch 1, **dadurch gekennzeichnet, dass** die erste dioptrische Einrichtung (9) Mittel umfasst, derart, dass das virtuelle Bild (25) aus der Sicht der abbildenden Optik (23) hinter den reellen Licht aussendenden Bereichen (31) liegt.

6. Leuchte nach Anspruch 1, **dadurch gekennzeichnet, dass** die erste dioptrische Einrichtung (9) für jede Lichtquelle (8) eine Sammellinse (16) aufweist.

7. Leuchte nach Anspruch 6, **dadurch gekennzeichnet, dass** die Lichtquelle (8) von der zugehörigen Sammellinse (16) der ersten dioptrischen Einrichtung (9) einen Abstand aufweist, der kleiner ist als die Brennweite der Sammellinse (16).

8. Leuchte nach Anspruch 6, **dadurch gekennzeichnet, dass** die Lichtquelle (8), die sich nicht auf der optischen Achse (28) der abbildenden dioptrischen Einrichtung (23) befindet, gegenüber der optischen Achse der zugehörigen Sammellinse (16) dezentriert ist, derart, dass die virtuellen Bilder der Lichtquellen (8) übereinander liegen.

9. Leuchte nach Anspruch 1, **dadurch gekennzeichnet, dass** alle oder einige der dioptrischen Einrichtungen (9,23) nach dem Fresnel-Prinzip als Stufenoptiken ausgeführt sind.

10. Leuchte nach Anspruch 1, **dadurch gekennzeichnet, dass** die abbildende Optik (23) parallel zur optischen Achse (28) in dem Gehäuse (2) geführt ist.

11. Leuchte nach Anspruch 1, **dadurch gekennzeichnet, dass** die abbildende Optik (23) von einer einfachen plankonvexen Linse gebildet ist.

12. Leuchte nach Anspruch 1, **dadurch gekennzeichnet, dass** die Linsen (16) die ersten dioptrischen Einrichtung (9) Plankonvexlinsen sind.

## Claims

1. Lamp (1) with a housing (2), with at least two light sources (8) arranged next to each other in the housing (2), all of which radiate to the same side of the housing (2) and of which each comprises a light-emitting region (31), and with an imaging dioptric device (23), **characterised by** a first dioptric device (9) located in front of the light sources (8) in the beam path and configured such that, from the actual light-emitting regions (31), it generates a single, at least approximately virtual image (25) of the light-emitting region (31), in that the light-emitting regions (31) are essentially superimposed into substantially a single light-emitting region (25), wherein the imaging dioptric device (23) is configured to form the image of the virtual light-emitting region (25) on a surface.

2. Lamp according to claim 1, **characterised in that** the light source (8) is formed by a light-emitting diode.

3. Lamp according to claim 1, **characterised in that** the first dioptric device (9) comprises a prism (32) for each light source (8) which does not lie on the optical axis (28) of the imaging dioptric device (23).

4. Lamp according to claim 3, **characterised in that** in the case of an annular arrangement of light sources (8), the prisms (32) are combined into a ring with triangular cross-section.

5. Lamp according to claim 1, **characterised in that** the first dioptric device (9) comprises means such that the virtual image (25) lies behind the actual light-emitting regions (31) in relation to the imaging lens (23).

6. Lamp according to claim 1, **characterised in that** the first dioptric device (9) comprises a converging lens (16) for each light source (8).

7. Lamp according to claim 6, **characterised in that** the light source (8) has a distance from the associated converging lens (16) of the first dioptric device (9) which is smaller than the focal length of the converging lens (16).

8. Lamp according to claim 6, **characterised in that** the light source (8) which does not lie on the optical axis (28) of the imaging dioptric device (23) is decentred relative to the optical axis of the associated converging lens (16) such that the virtual images of the light sources (8) are superimposed.

9. Lamp according to claim 1, **characterised in that** all or some of the dioptric devices (9, 23) are configured as echelon lenses according to the Fresnel principle.

10. Lamp according to claim 1, **characterised in that** the imaging lens (23) is guided parallel to the optical axis (18) in the housing (2).

11. Lamp according to claim 1, **characterised in that** the imaging lens (23) is formed by a single plano-convex lens.

12. Lamp according to claim 1, **characterised in that** the lenses (16) of the first dioptric device (9) are plano-convex lenses.

## Revendications

1. Lampe (1),
comprenant un boîtier (2),
comprenant au moins deux sources lumineuses (8) qui sont disposées l'une à côté de l'autre dans le boîtier (2), qui rayonnent toutes vers le même côté du boîtier (2) et qui présentent chacune une zone (31) émettant de la lumière, et
comprenant un élément dioptrique (23) de reproduction, **caractérisée en ce que**
elle comporte un premier élément dioptrique (9) qui se trouve dans le trajet des rayons devant les sources lumineuses (8) et est agencé de manière telle qu'il génère, à partir des zones (31) réelles émettant de la lumière, une image (25) unique au moins approximativement virtuelle des zones (31) émettant de la lumière, dans laquelle les zones (31) émettant de la lumière se superposent pour former sensiblement une zone (25) unique émettant de la lumière,
l'élément dioptrique (23) de reproduction est agencé pour reproduire sur une surface l'image de la zone virtuelle (25) émettant de la lumière.

2. Lampe selon la revendication 1, **caractérisée en ce que** la source lumineuse (8) est constituée d'une diode électroluminescente.

3. Lampe selon la revendication 1, **caractérisée en ce que** le premier élément dioptrique (9) comprend un prisme (32) pour chaque source lumineuse (8) qui ne se situe pas sur l'axe optique (28) de l'élément dioptrique (23) de reproduction.

4. Lampe selon la revendication 3, **caractérisée en ce que**, avec une disposition annulaire () des sources lumineuses (8), les prismes (32) sont regroupés pour former un anneau () de section triangulaire.

5. Lampe selon la revendication 1, **caractérisée en ce que** le premier élément dioptrique (9) comprend des moyens tels que, vu depuis l'optique (23) de reproduction, l'image virtuelle (25) se situe derrière les zones (31) réelles émettant de la lumière.

6. Lampe selon la revendication 1, **caractérisée en ce que** le premier élément dioptrique (9) présente une lentille convergente (16) pour chaque source lumineuse (8).

7. Lampe selon la revendication 6, **caractérisée en ce que** la source lumineuse (8) présente par rapport à la lentille convergente (16) associée du premier dispositif dioptrique (9), une distance qui est plus petite que la distance focale de la lentille convergente (16).

8. Lampe selon la revendication 6, **caractérisée en ce que** la source lumineuse (8) qui ne se trouve pas sur l'axe optique (28) de l'élément dioptrique (23) de reproduction est décentrée par rapport à l'axe optique de la lentille convergente (16) associée, de telle sorte que les images virtuelles des sources lumineuses (8) se superposent.

9. Lampe selon la revendication 1, **caractérisée en ce que** tous les éléments dioptriques (9, 23) ou quelques-uns sont réalisés selon le principe de Fresnel, en tant que systèmes optiques à saut d'indice.

10. Lampe selon la revendication 1, **caractérisée en ce que** le système optique (23) de reproduction est guidé dans le boîtier (2) parallèlement à l'axe optique (28).

11. Lampe selon la revendication 1, **caractérisée en ce que** l'optique (23) de reproduction est constitué d'une lentille plan-convexe simple.

12. Lampe selon la revendication 1, **caractérisée en ce que** les lentilles (16) du premier élément dioptrique (9) sont des lentilles plan-convexes.
